(19) Europäisches Patentamt
European Patent Office
Office européen des brevets

(11) **EP 1 755 096 A1**

(12) **EUROPEAN PATENT APPLICATION**
published in accordance with Art. 158(3) EPC

(43) Date of publication:
**21.02.2007 Bulletin 2007/08**

(51) Int Cl.:
***G09B 29/00*** *(2006.01)* ***G01C 21/00*** *(2006.01)*

(21) Application number: **05739345.6**

(22) Date of filing: **16.05.2005**

(86) International application number:
**PCT/JP2005/008919**

(87) International publication number:
**WO 2005/114618 (01.12.2005 Gazette 2005/48)**

(84) Designated Contracting States:
**DE FR GB**

(30) Priority: **24.05.2004 JP 2004153858**

(71) Applicant: **Matsushita Electric Industrial Co., Ltd.**
**Kadoma-shi**
**Osaka**
**571-8501 (JP)**

(72) Inventor: **NISHI, Hirotaka**
**c/o Matsushita Elec. Ind. Co., Ltd**
**1-3-7 Shiromi, Chuo-ku, Osaka 540-6319 (JP)**

(74) Representative: **Grünecker, Kinkeldey,**
**Stockmair & Schwanhäusser**
**Anwaltssozietät et al**
**Maximilianstrasse 58**
**80538 München (DE)**

(54) **DIGITAL MAP POSITION INFORMATION TRANSMITTING METHOD, POSITION INFORMATION TRANSMITTER, AND POSITION INFORMATION RECEIVER**

(57)    A position information transmitter and position information receiver in which the amount of data of when a vector shape on a digital map is expressed by a node sequence composed of nodes and transmitted is reduced. In the position information transmitter (100), when a vector shape to be transmitted is selected referring to digital map database (120) a shape data crating section (131) converts the selected vector shape into a node sequence to create shape vector data, a start point node processing section (132) converts position information on a start point node of each node sequence into relative position information on the relative position from a reference point from the absolute latitude/longitude, and a position information transmitting section (140) transmits it. In the position information receiver (200), a start point node restoring section (231) restores the absolute position information on the start point node of each node sequence on the basis of the position information on the reference point, and a node position restoring section (232) sequentially restores the position information on each node constituting shape vector data on the basis of the absolute position information on the start point.

FIG.1

**Description**

Technical Field

The present invention relates to a position information transmitting method of a digital map, a position information transmitting apparatus and a position information receiving apparatus for transmitting position information of the digital map and the traveling vehicle in which absolute position information that can be specified on both the transmitting side and the receiving side is used to enable efficient position specification and efficient use of transport network.

Background Art

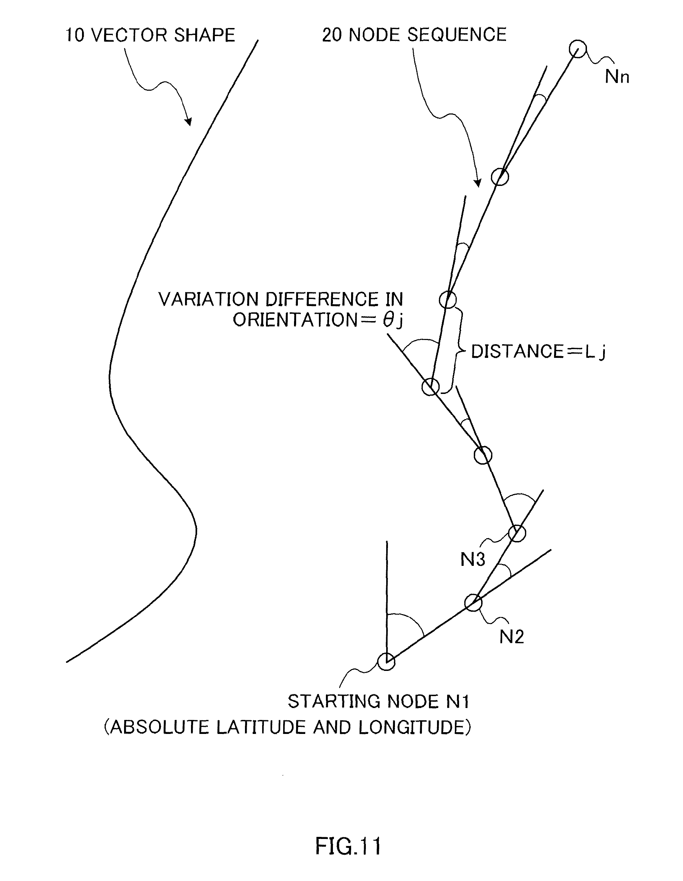

In the conventional position information transmitting method, the transmitting side, for example, as show n in FIG. 11, transmits shape vector data in which: vector shape 10 on the digital map is represented with node sequence 20 including a plurality of nodes N1 to Nn, ; position information of the starting node N1 in the position information of a plurality of consecutive nodes N1 to Nn in node sequence 20 is represented by the absolute latitude and longitude; and, position information of the other nodes N2 to Nn is represented by the distance Lj and the relative orientation (deflection angle) θj or the displacement difference in the orientation from the preceding node. The receiving side receives the shape vector data, restores the absolute latitude and longitude of each node N1 to Nn configuring node sequence 20, specifies and displays the vector shape on the digital map (see, for example, Patent Document 1).
Patent Document 1: Japanese Patent Application Laid-Open No. 2002-328027 (Page 6, FIG.1)

Disclosure of Invention

Problems to be Solved by the Invention

However, in the conventional position information transmitting method, the position information of the starting node of the shape vector data is represented by the absolute latitude and longitude, which results in a problem that the amount of data for the starting node becomes large compared to other nodes represented by the displacement difference from adjacent nodes.
In particular, when a great number of shape vector data is transmitted, the number of starting nodes becomes large. Therefore, when all the starting nodes are represented by the absolute latitude and longitude, the amount of data further increases.
It is therefore an object of the present invention to provide a position information transmitting method of the digital map, a position information transmitting apparatus and a position information receiving apparatus capable of reducing the amount of data even if a vector shape on a digital map is represented by position information of a plurality of nodes and transmitted.

Means for Solving the Problem

A position information transmitting method of the digital map of the present invention is a position information transmitting method of a digital map for transmitting shape vector data in which a vector shape on a digital map is represented by a node sequence including a plurality of nodes and position information of the plurality of nodes is respectively represented by relative position information from previous adjacent node, the method including the steps of calculating an absolute position of each starting node of a plurality of shape vector data, selecting a reference point of the node sequence including a plurality of the starting nodes and representing the position information of the selected reference point with absolute position information; representing the position information of each starting node with relative position information with respect to the absolute position information of the reference point, and transmitting the position information of the reference point, each starting node and the shape vector data group to a communicating party.
A position information transmitting apparatus of a digital map of the present invention is a position information transmitting apparatus of a digital map for representing a vector shape on a digital map with a node sequence including a plurality of nodes and transmitting the position information of the plurality of nodes, the position information transmitting apparatus including a position information converting section for representing the position information of the starting node of the vector shape with relative position information with respect to predetermined absolute position information and representing the position information of the nodes other than the starting node respectively with relative position information from previous adjacent node, and a transmission section for transmitting position information of the plurality of nodes from the position information converting section.
A position information receiving apparatus of a digital map of the present invention is a position information receiving apparatus comprising, a receiving section for receiving position information in which a vector shape on a digital map is represented by a node sequence including a plurality of nodes, the position information of the starting node of the vector shape is represented by relative position information with respect to predetermined absolute position information, and position information of the nodes other than the starting node is respectively represented by relative position information from previous adjacent node, and a position information restoring section for restoring the absolute position information of the starting node from the relative position information of the starting node based on the predetermined absolute position information, and restoring the absolute position information of the nodes other than the starting node from the relative position information of each node based on the restored absolute position information of the previous adjacent node from the position information of the next node adjacent to the starting node.

Advantageous Effect of the Invention

According to the present invention, the position information of the starting node is transmitted by relative position information so that the amount of data is reduced when position information of the starting node is transmitted, and it is possible to reduce the amount of data of shape vector data upon transmitting data. As a result, it is possible to transmit shape vector data from the transmitting side to the receiving side efficiently, and use the communication bandwidth of the data transmission network effectively.

Brief Description of Drawings

FIG. 1 is a block diagram showing a configuration of a position information transmitting apparatus and a position information receiving apparatus for executing a position information transmitting method of a digital map according to Embodiment 1 of the present invention;
FIG.2 is a flow chart illustrating a transmitting operation of a position information transmitting apparatus according to Embodiment 1 of the present invention;
FIG.3 shows an example of a format of position information data transmitted from a position information transmitting apparatus to a position information receiving apparatus of Embodiment 1 of the present invention;
FIG.4 is a flow chart illustrating a receiving operation of a position information receiving apparatus of Embodiment 1 of the present invention;
FIG.5 schematically shows a method for a starting node processing section of Embodiment 2 of the present invention to convert the starting node of each vector shape to a relative position representation;
FIG.6 schematically shows a method for a starting node processing section of Embodiment 3 of the present invention to convert the starting node of each vector shape to a relative position representation;
FIG.7 is schematically shows a method for a starting node processing section of Embodiment 4 of the present invention to convert the starting node of each vector shape to a relative position representation;
FIG.8 is a block diagram showing a configuration of a position information transmitting and receiving apparatus according to Embodiment 5 of the present invention;
FIG.9 shows an outline of a probe car system for executing the position information transmitting method according to Embodiment 6 of the present invention;
FIG.10 is a flow chart illustrating the operation in the probe car system for executing the position information transmitting method according to Embodiment 6 of the present invention; and
FIG.11 is an explanatory view showing the position information in the position information transmitting method of a conventional digital map.

Best Mode for Carrying Out the Invention

Embodiments of the present invention will now be described below with reference to the accompanying drawings.

(Embodiment 1)

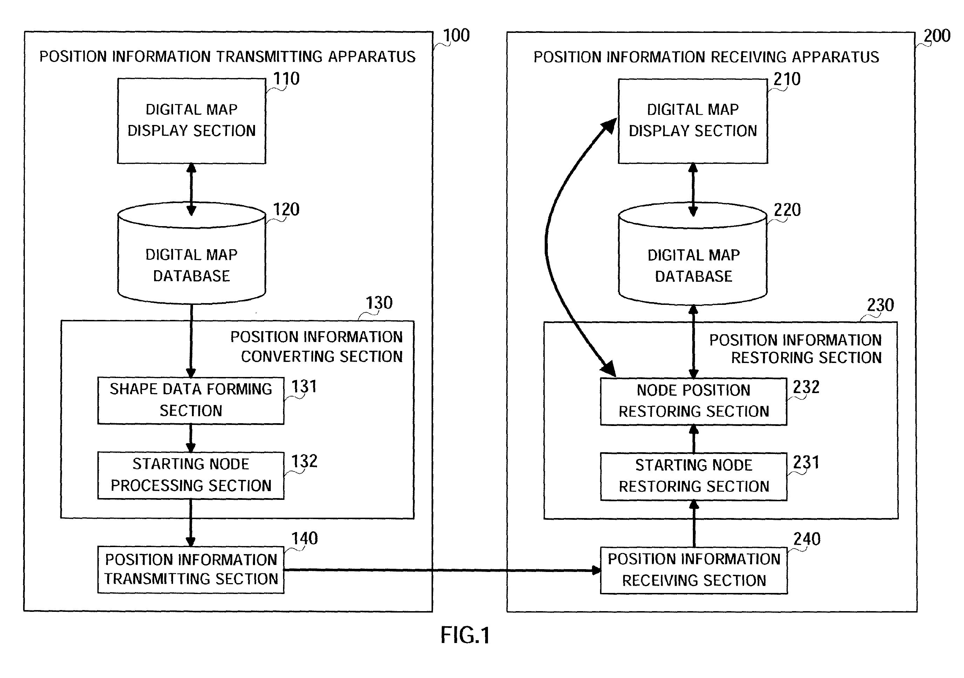

FIG.1 is a block diagram showing a configuration of position information transmitting apparatus 100 and position information receiving apparatus 200 for executing the position information transmitting method according to Embodiment 1 of the present invention.
In FIG.1, position information transmitting apparatus 100 includes digital map display section 110 for superimposing and displaying position information on the digital map, digital map database 120 for storing the digital map, position information converting section 130 for converting the position information on the digital map to a node sequence of shape vector data, and position information transmitting section 140 for transmitting the position information represented by the node sequence of the shape vector.

Position information converting section 130 is composed of shape data forming section 131 for forming the node sequence of the shape vector data from the position information on the digital map, and starting node processing section 132 for processing the position information of the starting node of the plurality of shape vector data.

In FIG.1, position information receiving apparatus 200 includes digital map display section 210 for superimposing and displaying position information on the digital map, digital map database 220 for storing the digital map, position information restoring section 230 for restoring the received position information on the digital map, and position information receiving section 240 for receiving the position information represented by the node sequence of the shape vector.

Position information restoring section 230 includes starting node restoring section 231 for sequentially restoring the position information of a plurality of starting nodes, and node position restoring section 232 for restoring the individual node position information of the shape vector data on the digital map from the node sequence of each shape vector data.

In practice, center apparatus of the traffic information providing service center and the like that transmits position information and related traffic jam information etc. corresponds to position information transmitting apparatus 100. Furthermore, the navigation-mounted vehicle, mobile terminals and the like that receive position information and related traffic jam information etc. from the center apparatus of the traffic information providing service center correspond to position information receiving apparatus 200.

Next, a transmitting operation of position information transmitting apparatus 100 of this embodiment will be described.

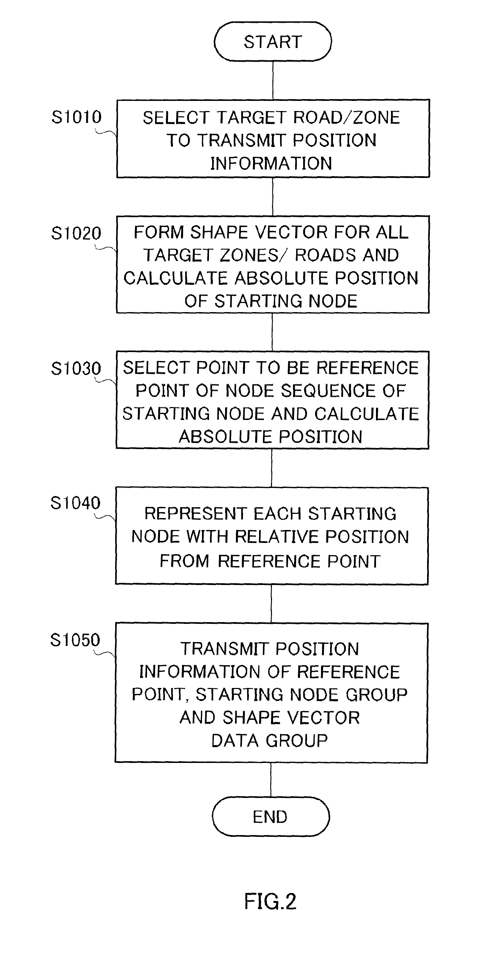

FIG.2 is a flow chart illustrating a transmitting operation of position information transmitting apparatus 100.

In position information transmitting apparatus 100, first, the target road and zone that is the vector shape to be transmitted as the position information and/or the event position of an accident and the like is selected with reference to the digital map read from digital map database 120 by the operator etc. and displayed at digital map display section 110, and the selected target road and zone is output to position information converting section 130 (S1010). In the following description, a plurality of selected target roads and zones is assumed to exist.

At position information converting section 130, shape data forming section 131 first represents the selected target roads and zones to a node sequence represented by the absolute latitude and longitude. The node sequence of all the target roads and zones are then converted to the starting node represented by the absolute latitude and longitude and node sequences represented by the distance and the relative orientation from the preceding node, and the shape vector data is formed (S1020).

One starting node exists for one shape vector data. In order to represent all the starting nodes with less amount of data, in this embodiment, starting node processing section 132 selects one new reference point based on the position relation of each starting node (S1030), and converts the starting node from the absolute position representation to the relative position representation from the reference point (S1040).

Here, in Embodiment 1, the new reference point may be a reference point fixedly set in advance on position information transmitting apparatus 100 side and position information receiving apparatus 200 side, or may be a reference point transmitted from position information transmitting apparatus 100 side to position information receiving apparatus 200. Further, a number of candidates for the reference point, of which absolute position is already known on the transmitting side and the receiving side, may exist, and a specifying code for specifying the new reference point may be transmitted every time the reference point changes.

Here, the reduction in the amount of data in the case that the position information of the starting nodes N1 to Nn is compared with the case indicated by the absolute latitude and longitude will be briefly described.

For example, if the minimum resolution of the latitude and longitude is, for example, 1/10 sec unit--that is, 3 m resolution--the number of bits necessary to specify the position with the absolute latitude and longitude becomes 23 bits for the latitude and 24 bits for the longitude by (Equation 1) and (Equation 2).

$$[\text{Equation 1}]$$

$$\log_2 (90 \times 60 \times 60 \times 10) + 1 = 22.6 \quad \dots (\text{Equation 1})$$

[Equation 2]

$$\log_2(180 \times 60 \times 60 \times 10) + 1 = 23.6 \quad \dots (\text{Equation } 2)$$

In (Equation 1) and (Equation 2), "+1" is a code bit.

On the other hand, the number of bits necessary to represent latitude and the longitude of the range of the Secondary Area Partitions of Grid Square becomes 13 bits for the latitude and 14 bits for the longitude from (Equation 3) and (Equation 4) assuming the difference in latitude and longitude of the SecondaryArea Partitions of Grid Square is, for example, 5 minutes for latitude and 7 minutes 30 seconds for the latitude.

[Equation 3]

$$\log_2(5 \times 60 \times 10) + 1 = 12.6 \quad \dots (\text{Equation } 3)$$

[Equation 4]

$$\log_2(7.5 \times 60 \times 10) + 1 = 13.1 \quad \dots (\text{Equation } 4)$$

In (Equation 3) and (Equation 4), "+1" is a code bit.

For example, if there are 100 shape data in the range of the Secondary Area Partitions of Grid Square, (23+24) $\times$100=4700 (bits) are necessary to represent all the starting nodes in the absolute latitude and longitude.

According to the method of Embodiment 1 described above, on the other hand, (23+24) + (13+14) $\times$100=2747 (bits) are necessary to represent with reference point + relative latitude and longitude.

In other words, according to the method of Embodiment 1, it is possible to reduce the amount of data by 4700-2747=1953(bits)= approximately 244 (bytes).

The reference point, the starting node group and the shape vector data group are sent to position information transmitting section 140 and transmitted from position information transmitting section 140 to position information receiving apparatus 200 (S1050).

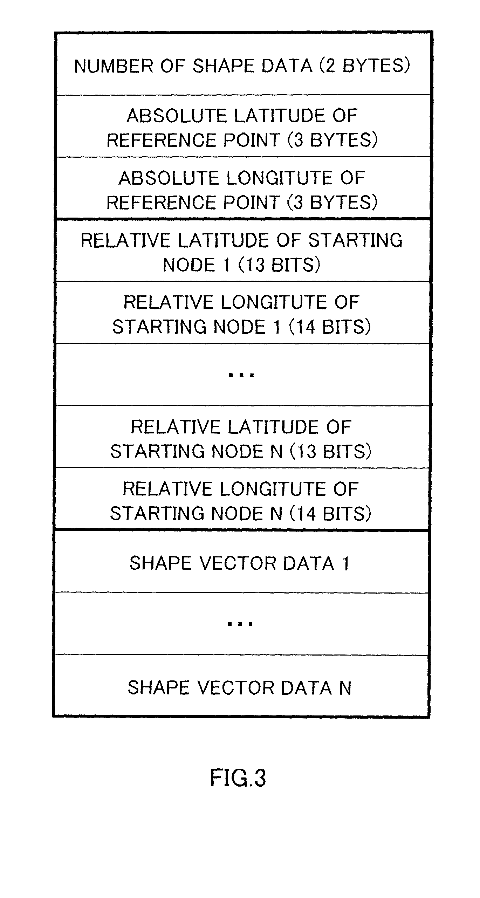

FIG.3 shows one example of a format of position information data transmitted from position information transmitting apparatus 100 to position information receiving apparatus 200.

As shown in FIG.3, transmission from position information transmitting apparatus 100 to position information receiving apparatus 200 is made in the data format of shape vector number (2 bytes), which is the number of shape vectors, absolute latitude of the reference point (3 bytes), absolute longitude of the reference point (3 bytes), relative latitude of the starting node 1 (13 bits), relative longitude of the starting node 1 (14 bits), ... , relative latitude of the starting node N (13 bits), relative longitude of the starting node N (14 bits), relative position information of the remaining nodes of the shape vector data 1 with the starting node 1 as the starting node, ... , and the relative position information of the remaining nodes of the shape vector data N with the starting node N as the starting node.

As it is obvious from FIG.3, according to the method of Embodiment 1, only the reference point of each starting node 1 to N is represented by the absolute latitude and longitude, and all of the starting nodes 1 to N are represented by the relative latitude and longitude. Therefore, it is possible to reduce the amount of data compared to when all the starting nodes 1 to N of each shape vector data are represented by the absolute latitude and longitude.

In addition, if the position information of the reference point does not change even when the reference point fixedly set in advance on position information transmitting apparatus 100 side and position information receiving apparatus 200 side is used as a new reference point, or when the reference point is transmitted from position information transmitting apparatus 100 side to position information receiving apparatus 200 side, position information transmitting section 140 does not need to transmit the reference point to position information receiving apparatus 200. That is, the absolute latitude and longitude of the reference point can be omitted in the data format shown in FIG.3. Therefore, a case in which position information transmitting section 140 needs to transmit the absolute position information of the reference point is at least a case in which the reference point is transmitted from position information transmitting apparatus 100 to position information receiving apparatus 200, or a case in which the position information of the reference point has changed. At position information receiving apparatus 200, the reference point fixedly set in advance on position information receiving apparatus 200 side or the absolute position information that has been previously transmitted from position information transmitting apparatus 100 and has been used may be used as it is if the absolute position information of the reference point is not transmitted from position information transmitting apparatus 100. As a result, it is possible to eliminate the transmission of the reference point from position information transmitting apparatus 100 side to position information receiving apparatus 200 or reduce the number of transmissions, so that it is also possible to reduce the amount of data accordingly.

Next, the receiving process procedures in position information receiving apparatus 200 of this embodiment will now be described.

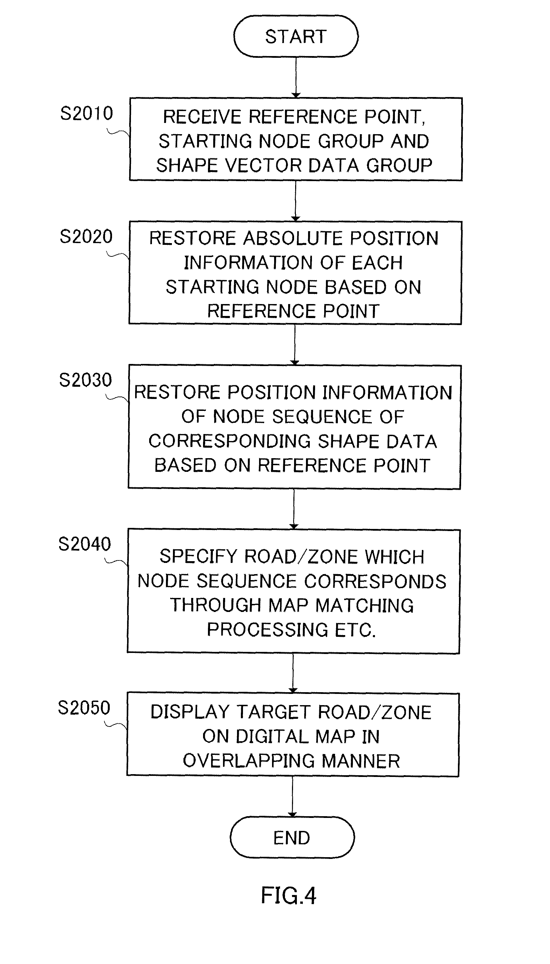

FIG.4 is a flowchart illustrating the receiving operation of position information receiving apparatus 200.

At position information receiving apparatus 200, position information receiving section 240 first receives the position information of the reference point, the starting node group, and the shape vector data group transmitted from position information transmitting apparatus 100 (S2010) . If the position information from position information transmitting apparatus 100 is not transmitted, the reception is not carried out.

At starting node restoring section 231, the absolute position information of all the starting nodes represented by the relative position information from the reference point are restored based on the reference point represented by the absolute latitude and longitude (S2020). If the position information of the reference point is not transmitted from position information transmitting apparatus 100, starting node restoring section 231 uses the absolute position information of the reference point set in advance on the transmitting side and the receiving side, or the absolute position information of the reference point used up till then, as described above.

Next, at node position restoring section 232, the position information of the node sequence of the corresponding shape vector data is sequentially restored based on the absolute position information of the starting node (S2030).

Digital map display section 210 performs map matching based on the position information of the node sequence restored by reading the digital map from digital map database 220, and specifies the road and zone on the digital map (S2040), and then superimposes and displays the target road and zone in vector shape specified by the transmitting side on the digital map (S2050).

Therefore, according to Embodiment 1, the position information of the starting nodes N1 to Nn of each shape vector data is represented by the relative position information with respect to the reference point and transmitted, so that the number of bits can be reduced and the amount of data to be transmitted can be reduced compared to when the position information of all the starting nodes N1 to Nn is represented by the absolute latitude and longitude.

In particular, with Embodiment 1, when the reference point fixedly set in advance on position information transmitting apparatus 100 side and position information receiving apparatus 200 side is used as a new reference point, or when the position information of the previously transmitted reference point is used if the position information of the reference point has not changed, the position information of the reference point does not need to be transmitted. Therefore, it is also possible to reduce the amount of data to be transmitted.

(Embodiment 2)

Next, Embodiment 2 of the present invention will be described.

With Embodiment 1, the reference point for representing the position information of the starting node N1 to Nn of each shape vector data with relative position information is simply assumed as the absolute position set in advance on both the transmitting side and the receiving side or the absolute position transmitted from the transmitting side to the receiving side. However, with Embodiment 2, a more specific method of determining the reference point will be described. Only the process at starting node processing section 132 differs from Embodiment 1, and the process of starting node processing section 132 of Embodiment 2 will be mainly described using the configuration of Embodiment 1 shown in FIG. 1.

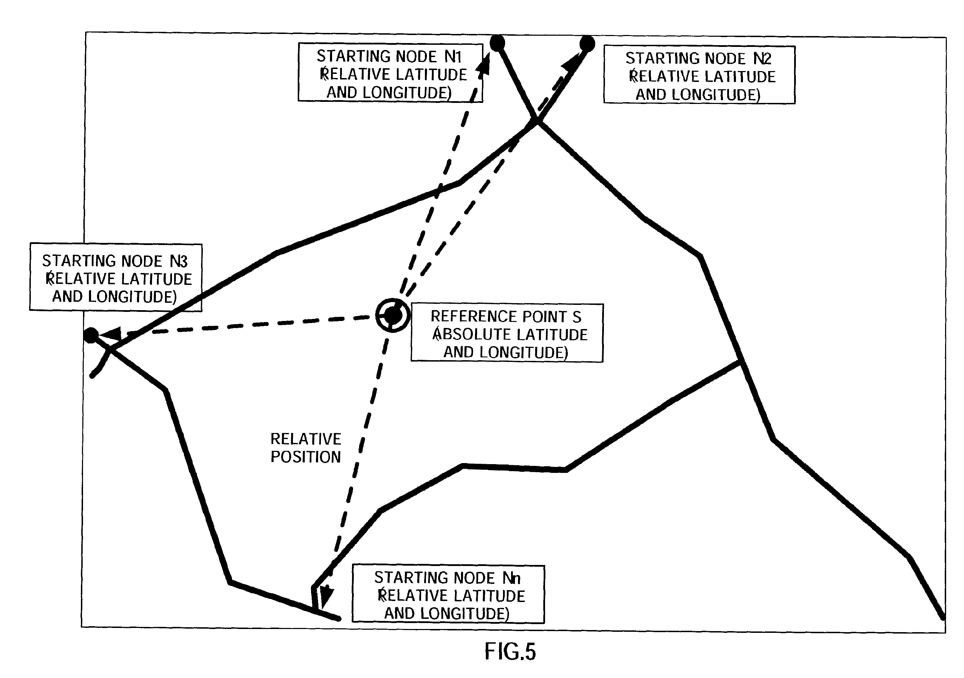

FIG.5 schematically shows a method for starting node processing section 132 of Embodiment 2 to convert the starting node of each vector shape to the relative position representation.

The shape vector data is represented by the node sequence having the starting node as the end point, as described in FIG.11, and each node is represented by the distance and the displacement difference in the relative orientation with respect to the previous node. However, in FIG.5, nodes other than the starting node are omitted, and only the starting node and the shape are used for representation.

Starting node processing section 132 of Embodiment 2 operates as follows.

That is, all the starting nodes N1 to Nn of the shape vector data output from shape data forming section 131 are represented by the absolute latitude and longitude. As a result, starting node processing section 132 of Embodiment 2 first calculates the absolute latitude and longitude $(LAT_R, LON_R)$ of the barycenter from the absolute latitude and longitude of the starting nodes N1 to Nn to be transmitted, as shown in (Equation 5), and uses this point as the reference point of the starting node.

[Equation 5]

$$LON_R = \frac{\sum_{i=1}^{n} LON_i}{n} \qquad LAT_R = \frac{\sum_{i=1}^{n} LAT_i}{n} \qquad \dots (Equation\ 5)$$

Here, $LAT_i$ is the absolute latitude of the starting node $N_i$ and $LON_i$ is the absolute longitude of the starting node $N_i$.

Starting node processing section 132 of Embodiment 2 then calculates the position information of each starting node N1 to Nn with the relative latitude and longitude from the reference point represented by the absolute latitude and longitude ($LAT_R$, $LON_R$), or the barycenter position, from the absolute latitude and longitude of each starting node N1 to Nn to be transmitted, and assumes this position information as the position information of each starting node N1 to Nn.

Thus, according to Embodiment 2, position information of each starting node N1 to Nn is represented by the relative latitude and longitude with respect to the reference point of the barycenter of starting nodes N1 to Nn as and transmitted, so that, similar to Embodiment 1, the amount of data can be reduced compared to when the position information of all the starting nodes N1 to Nn is represented with absolute position information.

In particular, in Embodiment 2, when position information of each starting node N1 to Nn is represented by relative latitude and longitude, the barycenter of starting nodes N1 to Nn is the reference point, so that the amount of data can be reduced when each starting node N1 to Nn is represented with the relative latitude and longitude, and the effect of reducing the amount of data improves.

Furthermore, with Embodiment 2, the barycenter of starting nodes N1 to Nn is the reference point, and the relative latitude and longitude represented with respect to the barycenter as the reference point may tend to have values in a certain range. However, it is possible to further reduce the amount of data by performing coding through Huffman coding and entropy coding of range coder and the like when position information transmitting section 140 transmits the reference point, the starting node group, and the shape vector data group.

In Embodiment 2, description has been given in which transmission is performed using the barycenter of starting nodes N1 to Nn subject to transmission as the reference point, but the barycenter of the starting nodes of a plurality of vector shapes may be the barycenter of the starting nodes of a plurality of vector shapes transmitted at once, or may be the barycenter of the starting nodes of all vector shapes when the position information of the vector shape is transmitted over a pluralityof times. Therefore, in the former case, though it is necessary to transmit the reference point of the barycenter of the starting nodes every time a plurality of vector shapes are transmitted, in which case the amount of data of relative position information of starting nodes N1 to Nn can be reduced. In the latter case, on the other hand, the barycenter position of the starting nodes of all vector shapes is transmitted once at the beginning, in which case the amount of data of the relative position information of starting nodes N1 to Nn increases, but after the second time, it is not necessary to transmit the position information of the reference point every time a plurality of vector shapes are transmitted, so that it is possible to reduce the amount of data.

(Embodiment 3)

Next, Embodiment 3 of the present invention will be described.

Embodiment 2 has described that starting node processing section 132 represents each starting node with the relative latitude and longitude with respect to the reference point or the barycenter of starting nodes, but with Embodiment 3, an example will be described whereby one of starting nodes is used as the reference point. Only the process at starting node processing section 132 differs from Embodiments 1 and 2, and the process of starting node processing section 132 of Embodiment 3 will be described using the configuration of Embodiment 1 shown in FIG.1.

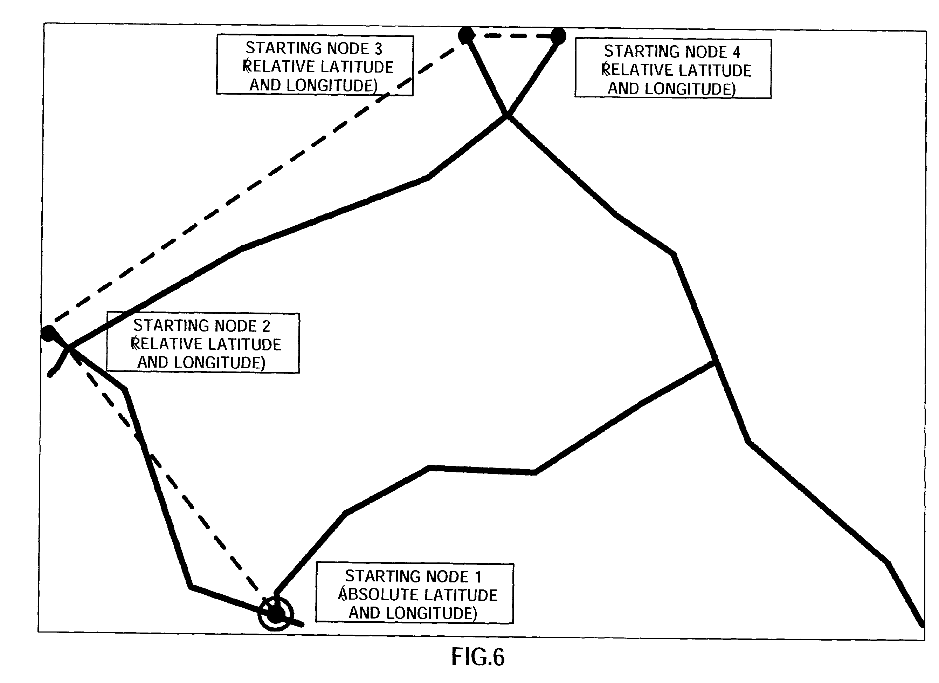

FIG.6 schematically shows a method for starting node processing section 132 of Embodiment 3 of the present invention to convert the starting node of each vector shape to the relative position representation.

At starting node processing section 132 of Embodiment3, starting nodes N1 to Nn are reordered so that the total extension of the line segments connecting all starting nodes N1 to Nn of the shape vector data output from shape data forming section 131 becomes a minimum, and are sequentially assumed as starting node 1, starting node 2, ···, starting node n. As a result, in the case shown in FIG.6, starting node Nn shown in FIG.5 becomes starting node 1, starting node N3 becomes starting node 2, starting node N1 becomes starting node 3, and starting node N2 becomes starting node 4.

At starting node processing section 132 of Embodiment 3, only starting node 1 is represented by the absolute latitude and longitude, and the starting nodes after starting node 2 are sequentially calculated with the relative latitude and longitude with respect to the previous adjacent node and this is used as the position information.

As a result, according to Embodiment 3, starting nodes N1 to Nn are reordered so that the total extension of the line segments connecting all starting nodes N1 to Nn becomes a minimum, only the starting node 1 that is the first starting point is represented by the absolute latitude and longitude, and starting nodes other than the starting node 1 are represented by the relative latitude and longitude with respect to the absolute latitude and longitude of the starting node 1, so that it is possible to reduce the amount of data to be transmitted compared to when position information of all starting nodes N1 to Nn is represented by the absolute latitude and longitude and transmitted.

In particular, in Embodiment 3, only the starting node or the starting point of each starting node N1 to Nn is represented by the absolute latitude and longitude, and starting nodes other than starting node 1 are represented by the relative latitude and longitude with respect to the absolute latitude and longitude of starting node 1. Therefore, it is not necessary to provide a new reference point in addition to staring node N1 to Nn and transmit the position information of the new reference point. Therefore, it is possible to reduce the amount of data to be transmitted.

In Embodiment 3, the nodes in which the distance of the line segments connecting all the starting nodes N1 to Nn are close are connected, and the starting nodes other than the starting node 1 are sequentially represented by the relative latitude and longitude, so that the value of the relative latitude and longitude tends to be a relatively small value. Therefore, when position information transmitting section 140 transmits the starting nodes, it is possible to further reduce the amount of data by performing coding through Huffman coding and entropy coding of the range coder etc.

(Embodiment 4)

Embodiment 3 has represented the starting nodes other than starting node 1 after reordering all starting nodes N1 to Nn of each shape vector data are represented by the relative latitude and longitude from the previous node. However, in Embodiment 4, the starting nodes other than the starting node 1 are represented by the displacement difference from the previous node, namely, the distance and the relative orientation. In Embodiment 4, only the process at starting node processing section 132 differs from Embodiments 1 to 3, and the process of starting node processing section 132 of Embodiment 4 will be described using the configuration of Embodiment 1 shown in FIG.1.

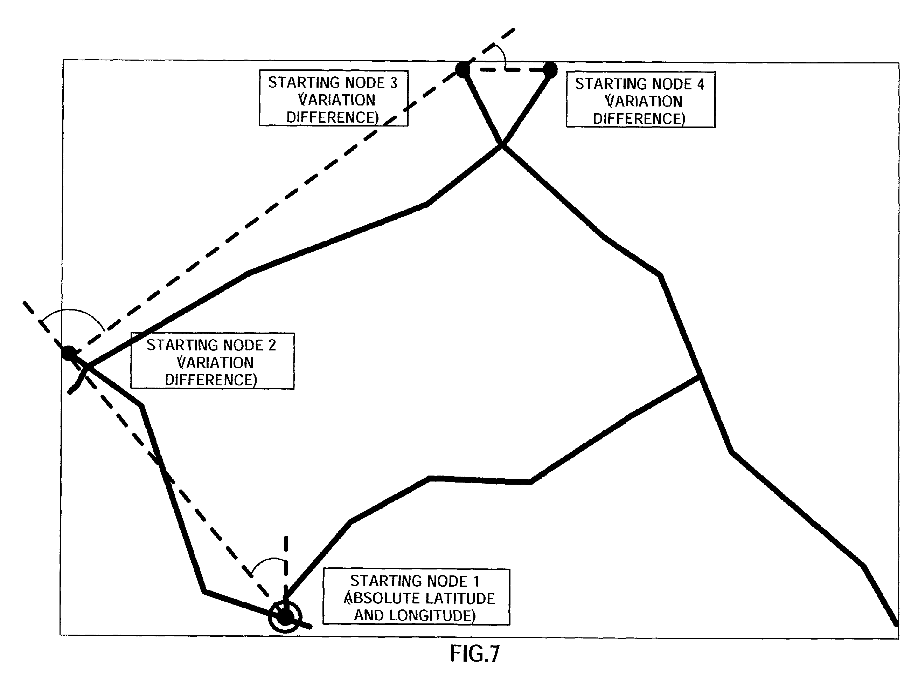

FIG.7 schematically shows a method for starting node processing section 132 of Embodiment 4 of the present invention to convert the starting node of each vector shape to the relative position representation.

As with Embodiment 3, starting node processing section 132 reorders the starting nodes N1 to Nn so that the total extension of the line segments connecting all the starting nodes N1 to Nn becomes a minimum, and the starting nodes are sequentially assumed as starting node 1, starting node 2, ···, starting node n.

In Embodiment 4, the node sequence composed of n starting nodes is assumed as one shape vector data, and each starting node is represented by the displacement difference of the distance and the relative orientation from the previous node, as with the shape vector data. In addition, as with Embodiment 3, starting node 1 is used as the starting node that is the starting point.

Therefore, according to Embodiment 4, transmission is performed with only the starting node 1 that is the starting point out of the starting nodes of a plurality of shape vector data represented by the absolute latitude and longitude, and the other starting nodes sequentially represented by the distance and the relative orientation from the previous node. Therefore, it is not necessary to provide a new reference point of each starting node as in Embodiment 3, and it is possible to reduce the amount of data effectively and easily.

In particular, in Embodiment 4, each shape vector data and the node sequence of the starting node are all expressed with the displacement difference of the distance and the relative orientation from the previous node, so that it is possible to reduce the amount of data by collectively coding all data.

(Embodiment 5)

Embodiments 1 to 4 has described that position information transmitting apparatus 100 includes starting node processing section 132 and position information receiving apparatus 200 includes starting node restoring section 231, but in Embodiment 5, position information transmitting and receiving apparatus 300 includes both starting node processing section 132 and starting node restoring section 231.

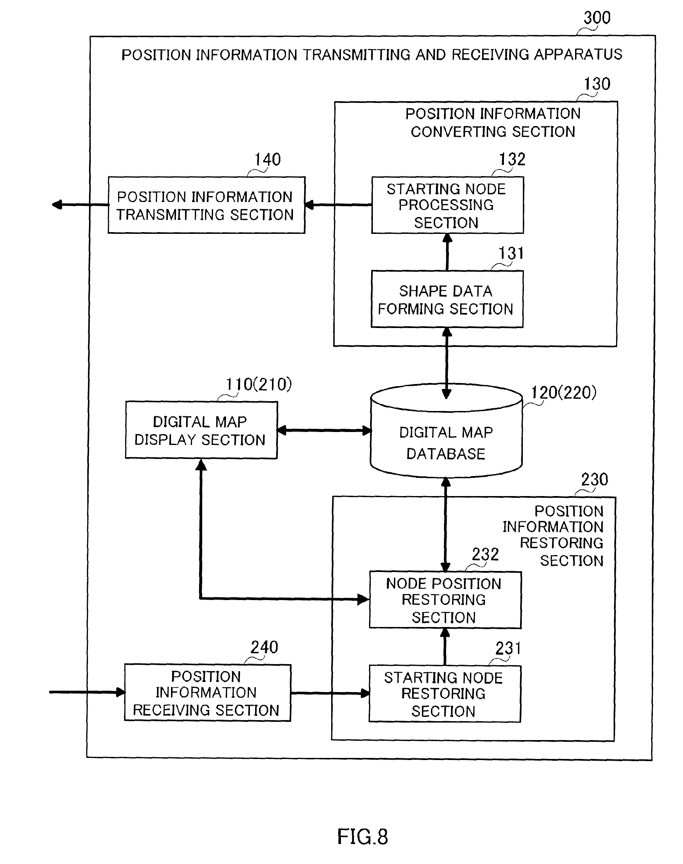

FIG.8 is a block diagram showing a configuration of position information transmitting and receiving apparatus 300 according to Embodiment 5 of the present invention.

Components in FIG.8 identical to those in position information transmitting apparatus 100 shown in FIG.1 and position information receiving apparatus 200 are assigned the same reference numerals. As apparent from FIG.8, position information transmitting and receiving apparatus 300 according to Embodiment 5 has components of position information transmitting apparatus 100 and position information receiving apparatus 200 shown in FIG.1. As such position information transmitting and receiving apparatus 300, a car navigation system with bidirectional communication function that not only receives but also transmits the position information of the vector shape, a car navigation system with such bidirectional communication function, a center apparatus of traffic information providing service center for receiving position information from a position information collecting apparatus and transmitting the position information of the vector shape, as will be described in Embodiment 6 below.

The operations of starting node processing section 132 and starting node restoring section 231 in position information transmitting and receiving apparatus 300 according to Embodiment 5 are identical to transmitting and receiving operations in the above described Embodiments 1 to 5.

Therefore, the same effects are obtained as with the above described Embodiments 1 to 4 by position information transmitting and receiving apparatus 300 according to Embodiment 5.

(Embodiment 6)

In Embodiment 6, the position information transmitting method of the present invention is applied to a probe car system for collecting the position information.

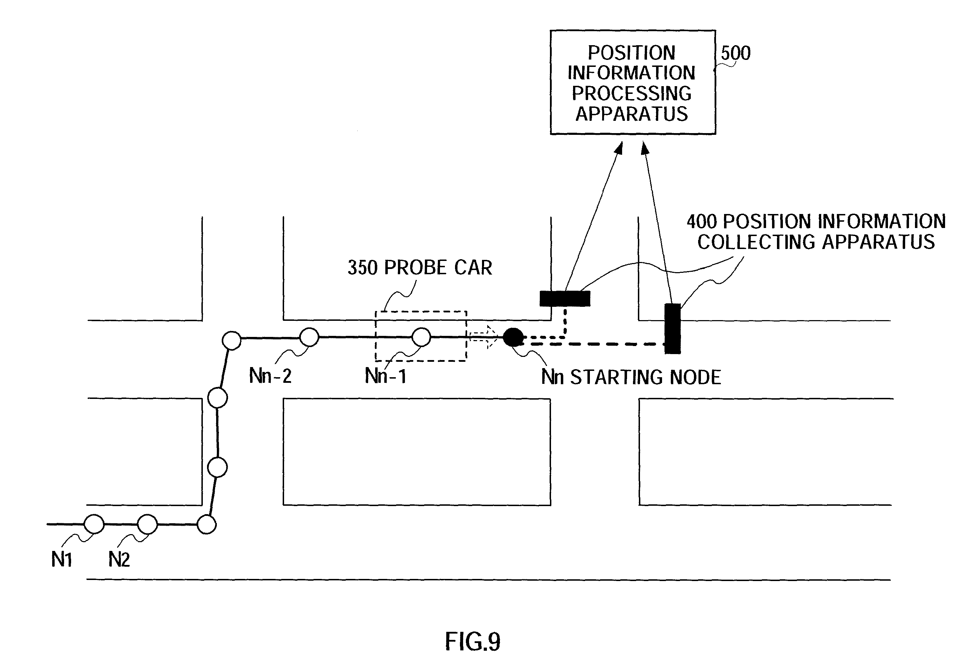

FIG.9 shows an outline of a probe car system for executing the position information transmitting method according to Embodiment 6 of the present invention.

The probe car system shown in FIG.9 is composed of probe car 350 for collecting and transmitting the trajectory (position information) of N1, N2, ···, of the nodes at a constant interval while traveling, a plurality of position information collecting apparatuses 400 provided on the shoulder side equipment and the like arranged on the shoulder side of the road for collecting the position information transmitted from probe car 350, and position information processing apparatus 500 for receiving the position information from the plurality of position information collecting apparatuses 400 and processing the same. In addition, each position information collecting apparatus 400 is provided on the shoulder side equipment and the like arranged on the shoulder side of the road, so that the position information of each position information collecting apparatus 400 is set in advance by the absolute latitude and longitude, and assumed as being recognized by position information processing apparatus 500.

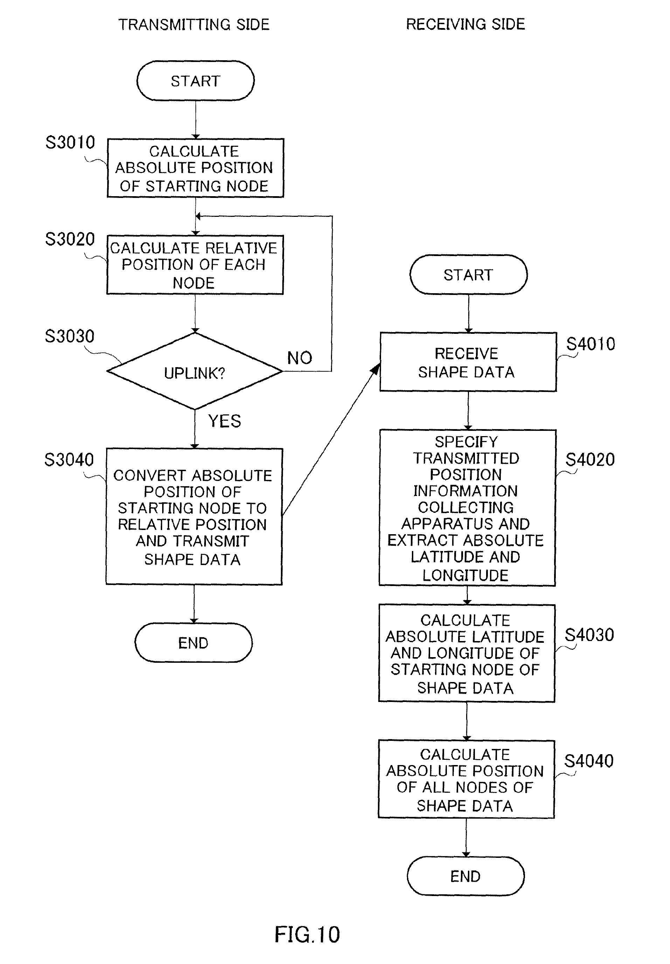

Next, the operation will be described. FIG.10 show a processing flow of the probe car system according to Embodiment 6 of the present invention for collecting the trajectory (position information) probe car 350 has traveled to position information processing apparatus 500 through a plurality of position information collecting apparatuses 400.

Upon starting to travel in the right direction of FIG.9 from the upper left, probe car 350 on the transmitting side collects the position information of each node N1, N2, ···, Nn-2, Nn-1, Nn, ··· at a constant timing and calculates the absolute position information with the most recent node as the starting node from the node sequence of the traveled trajectory for every constant timing different from the collecting timing of the node (step S3010). This is based on the assumption that the more recent the node, the more essential, and data is deleted from the oldest when all data cannot be transmitted due to the conditions of communication capacity, communication environment etc. In the following description, node Nn is assumed as the starting node (shape reference point).

Probe car 350 then calculates the position information of each node Nn-1, Nn-2, ..., N2, N1 before starting node Nn, which is the most recent node, with the relative position information from the subsequent adjacent node (step S3020). In addition, a method of calculating the relative position information of the vehicle position of each node Nn-1, Nn-2, ..., N2, N1 before the starting node Nn includes a method of representing the relative position information of the vehicle position of each node Nn-1, Nn-2, ···, N2, N1 with the relative latitude and longitude and a method of representing the distance and the relative orientation (deflection angle) from the subsequent adjacent node and representing simply with the line distance when probe car 350 is continuously advancing straight.

When probe car 350 passes in front of position information collecting apparatus 400 provided on the shoulder side equipment on the shoulder side such as the intersection and the like, probe car 350 communicates with position information processing apparatus 500 via position information collecting apparatus 400 and determines whether or not to uplink the position information of the plurality of shape vector data collected up to now by probe car 350, that is, to transmit to position information processing apparatus 500 via position information collecting apparatus (step S3030).

Here, probe car 350 returns to the process of step S3020 in the event that the position information of a plurality of shape vector data collected up to now is not uplinked to position information processing apparatus 500 ("No" in step S3030), and continues to calculate the relative position of the node at a constant timing while traveling and form the shape vector data.

Probe car 350 sends the absolute position information of the starting node Nn collected up to now and the position information of each node Nn-1, Nn-2, ···, N2, N1 before then to position information collecting apparatus 400 in the event that the position information of the plurality of shape vector data collected up to now is uplinked to position information processing apparatus 500 via position information collecting apparatus 400 ("Yes" in step S3030). Position information collecting apparatus 400 converts the absolute position information of the starting node Nn sent from probe car 350 to the relative position information with respect to the absolute position information of position information collecting apparatus 400, and transmits the same to position information processing apparatus 500 along with the relative position information of each node Nn-1, Nn-2, ..., N2, N1 collected before starting node Nn as the shape vector data (step S3040) .

Upon receiving the shape vector data and the like from position information collecting apparatus 400 (S4010), position information processing apparatus 500 on the receiving side first specifies position information collecting apparatus 400 that has transmitted the data, and extracts the absolute latitude and longitude of relevant position information collecting apparatus 400 (S4020). In addition, the absolute latitude and longitude of respective position information collecting apparatus 400 is assumed tobe stored in advance inposition information processing apparatus 500.

The starting node of each shape vector data is represented by the relative position from the absolute latitude and longitude which is the position information of position information collecting apparatus 400, so that position information processing apparatus 500 calculates the absolute latitude and longitude of the relevant starting node from the extracted absolute latitude and longitude of position information collecting apparatus 400 and the relative position information of the received starting node and, restores the absolute position (S4030). Position information processing apparatus 500 sequentially restores the absolute position of each node of the shape vector data based on the absolute latitude and longitude of the starting node (S4040).

Therefore, according to Embodiment 6, application is also made to methods and the like for transmitting the trajectory probe car 350 has traveled in the probe car system where probe car 350 that is the traveling vehicle is assumed as the mobile sensor, and probe data from probe car 350 is collected and used in the generation of traffic information and the like.

In particular, in Embodiment 6, the position of position information collecting apparatus 400 provided on the road is represented by the absolute latitude and longitude and stored in advance, and the position information of the starting node of the vector shape is represented by the relative position information with the absolute latitude and longitude of position information collecting apparatus 400 as the reference and transmitted to position information processing apparatus 500, so that it is possible to reduce the amount of transmitting data compared to when performing transmission with the starting node of each vector shape represented by the absolute latitude and longitude.

In particular, according to Embodiment 6, when collecting position information of node Nn-1, Nn-2, ···, N2, N1 at regular timings while traveling and forming the shape vector, probe car 350 on the transmitting side calculates absolute position information with respect to the most recent node Nn as the starting node from the node sequence of the traveled trajectory, and thus when all the data of the shape vector data cannot be transmitted due to the condition of communication capacity, communication environment etc., the data is deleted from the oldest, and the data of the most recent node is preferentially transmitted.

In addition, with Embodiment 6, description has been made in transmitting the shape vector data collected from probe car 350 by position information collecting apparatus 400 to position information processing apparatus 500, but position information collecting apparatus 400 may not have the collecting function or the transmitting function of the shape vector data, and may have a function of storing in advance the absolute position information of a plurality of position information collecting apparatuses 400 to be traveled by probe car 350 and acquiring from the server of position information processing apparatus 500 and the like. Therefore, when probe car 350 itself forms shape vector data, the absolute position information of the starting node is converted to the relative position information based on the absolute position information of position information collecting apparatus 400, and transmitted to position information processing apparatus 500.

Further, with the description of Embodiments 1 to 6, description has been made where the position information of each node configuring shape vector data is represented with the distance and the relative orientation (deflection angle) from the previous node as shown in the prior art of FIG.11, but the present invention is by no means limited, and may be represented by the relative latitude and longitude with the position of the previous node as the reference, and the method of expressing may be adaptively selected.

The present application is based on Japanese Patent Application No. 2004-153858, filedonMay24, 2004, entire content of which is expressly incorporated by reference herein.

Industrial Applicability

A position information transmitting method of the digital map, a position information transmitting apparatus and a position information receiving apparatus of the present invention have the effects of reducing the amount of data when vector shape on a digital map is represented by position information of a plurality of nodes and transmitted, and are effective as a method and the like for the service provider or broadcast station in transmitting the position information and the event position of some kind such as an accident when providing traffic information such as traffic jam information, traveling time, or POI (Point Of Interest) information of station, facility and the like to the terminal capable of displaying the digital map such as navigation installed vehicle, portable terminal etc. The present invention is applicable for use such as a method of transmitting the trajectory traveled by the traveling vehicle in the probe car system in which the traveling vehicle is assumed as the traveling sensor, data (probe data) is collected from the traveling vehicle and used for the generation of traffic information and the like.

**Claims**

1. A position information transmitting method of a digital map for transmitting shape vector data in which a vector shape on a digital map is represented by a node sequence including a plurality of nodes and position information of the plurality of nodes is respectively represented by relative position information from previous adjacent node, the method comprising the steps of:

   calculating an absolute position of each starting node of a plurality of shape vector data;
   selecting a reference point of the node sequence including a plurality of the starting nodes and representing the position information of the selected reference point with absolute position information;
   representing the position information of each starting node with relative position information with respect to the absolute position information of the reference point; and
   transmitting the position information of the reference point, each starting node and the shape vector data group to a communicating party.

2. The position information transmitting method of the digital map according to claim 1, wherein the absolute position information is set in advance on a transmitting side and a receiving side.

3. The position information transmitting method of the digital map according to claim 1, wherein the absolute position information is absolute position information transmitted from a transmitting side to a receiving side.

4. The position information transmitting method of the digital map according to claim 1, wherein the reference point is absolute latitude and longitude of a barycenter of each starting node.

5. The position information transmitting method of the digital map according to claim 1, wherein the position information of the plurality of the starting nodes represented by relative position information is transmitted by being compressed through coding.

6. The position information transmitting method of the digital map according to claim 1, wherein the reference point is a position of one starting node selected from the plurality of the starting nodes.

7. The position information transmitting method of the digital map according to claim 6, wherein each starting node of each of the plurality of vector shapes is connected so that the distance between each starting node becomes short, a vector shape is formed by each starting node, and the position information of the starting node of the vector shape by each starting node out of each starting node is transmitted by absolute latitude and longitude, and the position information of the starting nodes other than the starting node of the vector shape by each starting node is represented by relative latitude and longitude with respect to the position information of the previous starting node.

8. The position information transmitting method of the digital map according to claim 6, wherein each starting node of each of the plurality of vector shapes is connected so that the distance between each starting node becomes short, a vector shape is formed by each starting node, and the position information of the starting node of the vector shape by each starting node out of each starting node is transmitted by absolute latitude and longitude, and the position information of the starting nodes other than the starting node of the vector shape by each starting node is respectively transmitted with distance and relative orientation from the previous adjacent starting node.

9. A position information transmitting apparatus of a digital map for representing a vector shape on a digital map with a node sequence including a plurality of nodes and transmitting the position information of the plurality of nodes, the position information transmitting apparatus comprising:

   a position information converting section for representing the position information of the starting node of the vector shape with relative position information with respect to predetermined absolute position information and representing the position information of the nodes other than the starting node respectively with relative position information from previous adjacent node; and
   a transmission section for transmitting position information of the plurality of nodes from the position information converting section.

**10.** A position information receiving apparatus comprising:

a receiver for receiving position information in which a vector shape on a digital map is represented by a node sequence including a plurality of nodes, the position information of the starting node of the vector shape is represented by relative position information with respect to predetermined absolute position information, and position information of the nodes other than the starting node is respectively represented by relative position information from previous adjacent node; and

a position information restoring section for restoring the absolute position information of the starting node from the relative position information of the starting node based on the predetermined absolute position information, and restoring the absolute position information of the nodes other than the starting node from the relative position information of each node based on the restored absolute position information of the previous adjacent node from the position information of the next node adjacent to the starting node.

**Amended claims under Art. 19.1 PCT**

**1.** (Cancelled)

**2.** (Cancelled)

**3.** (Cancelled)

**4.** (Amended) A position information transmitting method of a digital map for transmitting shape vector data in which a vector shape on a digital map is represented by a node sequence formed with a plurality of nodes and in which position information of the plurality of nodes are represented byrelativepositioninformation with respect to respective previous, adjacent nodes, the method comprising the steps of:

calculating an absolute position of each starting node of a plurality of shape vector data;

selecting a reference point of the node sequence formed with a plurality of starting nodes as an absolute latitude and longitude of a barycenter of the starting nodes, and representing position information of the selected reference point with absolute position information;

representing the position information of the starting nodes with relative position information with respect to the absolute position information of the reference point; and

transmitting the position information of the reference point, the starting nodes and a shape vector data group, to a communicating party.

**5.** (Cancelled)

**6.** (Cancelled)

**7.** (Amended) A position information transmitting method of a digital map for transmitting shape vector data in which a vector shape on a digital map is represented by a node sequence formed with a plurality of nodes and in which position information of the plurality of nodes are represented by relative position information with respect to respective previous, adjacent nodes, the method comprising the steps of:

calculating an absolute position of each starting node of a plurality of shape vector data;

selecting one of plurality of starting nodes forming the node sequence as a reference point of the node sequence and representing position information of the selected reference point with absolute position information;

connecting the starting nodes of the plurality of vector shape data so that the distance between the starting nodes is short, forming a vector shape by the starting nodes, representing the position information of the starting node of the vector shape by each starting node out of the starting nodes by absolute latitude and longitude, and representing the position information of the starting nodes other than the starting node of the vector shape by each starting node by relative latitude and longitude with respect to the position information of the previous starting node; and

transmitting the position information of the reference point, the starting nodes and a shape vector data group, to a communicating party.

**8.** (Amended) A position information transmitting method of a digital map for transmitting shape vector data in which a vector shape on a digital map is represented by a node sequence formed with a plurality of nodes and in which position information of the plurality of nodes are represented by relative position information with respect to respective previous, adjacent nodes, the method comprising the steps of:

calculating an absolute position of each starting node of a plurality of shape vector data;
selecting one of plurality of starting nodes forming the node sequence as a reference point of the node sequence and representing position information of the selected reference point with absolute position information;
connecting each starting node of each of the plurality of vector shapes so that the distance between the starting nodes is short, forming a vector shape by the starting nodes, representing the position information of the starting node of the vector shape by each starting node out of the starting nodes by absolute latitude and longitude, and representing the position information of the starting nodes other than the starting node of the vector shape by each starting node with distance and relative orientation from the previous adjacent starting node; and
transmitting the position information of the reference point, the starting nodes and a shape vector data group, to a communicating party.

**9.** (Cancelled)

**10.** (Cancelled)

FIG.1

EP 1 755 096 A1

START

S1010 — SELECT TARGET ROAD/ZONE TO TRANSMIT POSITION INFORMATION

S1020 — FORM SHAPE VECTOR FOR ALL TARGET ZONES/ ROADS AND CALCULATE ABSOLUTE POSITION OF STARTING NODE

S1030 — SELECT POINT TO BE REFERENCE POINT OF NODE SEQUENCE OF STARTING NODE AND CALCULATE ABSOLUTE POSITION

S1040 — REPRESENT EACH STARTING NODE WITH RELATIVE POSITION FROM REFERENCE POINT

S1050 — TRANSMIT POSITION INFORMATION OF REFERENCE POINT, STARTING NODE GROUP AND SHAPE VECTOR DATA GROUP

END

FIG.2

| NUMBER OF SHAPE DATA (2 BYTES) |
| --- |
| ABSOLUTE LATITUDE OF REFERENCE POINT (3 BYTES) |
| ABSOLUTE LONGITUTE OF REFERENCE POINT (3 BYTES) |
| RELATIVE LATITUDE OF STARTING NODE 1 (13 BITS) |
| RELATIVE LONGITUTE OF STARTING NODE 1 (14 BITS) |
| ... |
| RELATIVE LATITUDE OF STARTING NODE N (13 BITS) |
| RELATIVE LONGITUTE OF STARTING NODE N (14 BITS) |
| SHAPE VECTOR DATA 1 |
| ... |
| SHAPE VECTOR DATA N |

FIG.3

START

S2010　RECEIVE REFERENCE POINT, STARTING NODE GROUP AND SHAPE VECTOR DATA GROUP

S2020　RESTORE ABSOLUTE POSITION INFORMATION OF EACH STARTING NODE BASED ON REFERENCE POINT

S2030　RESTORE POSITION INFORMATION OF NODE SEQUENCE OF CORRESPONDING SHAPE DATA BASED ON REFERENCE POINT

S2040　SPECIFY ROAD/ZONE WHICH NODE SEQUENCE CORRESPONDS THROUGH MAP MATCHING PROCESSING ETC.

S2050　DISPLAY TARGET ROAD/ZONE ON DIGITAL MAP IN OVERLAPPING MANNER

END

FIG.4

FIG.5

STARTING NODE N1
(RELATIVE LATITUDE
AND LONGITUDE)

STARTING NODE N2
(RELATIVE LATITUDE
AND LONGITUDE)

STARTING NODE N3
(RELATIVE LATITUDE
AND LONGITUDE)

REFERENCE POINT S
(ABSOLUTE LATITUDE
AND LONGITUDE)

RELATIVE
POSITION

STARTING NODE Nn
(RELATIVE LATITUDE
AND LONGITUDE)

EP 1 755 096 A1

FIG.6

EP 1 755 096 A1

FIG.7

**300**

POSITION INFORMATION TRANSMITTING AND RECEIVING APPARATUS

**130**

POSITION INFORMATION CONVERTING SECTION

**140**

POSITION INFORMATION TRANSMITTING SECTION

**132**

STARTING NODE PROCESSING SECTION

**131**

SHAPE DATA FORMING SECTION

**110(210)**

DIGITAL MAP DISPLAY SECTION

**120(220)**

DIGITAL MAP DATABASE

**230**

POSITION INFORMATION RESTORING SECTION

**232**

NODE POSITION RESTORING SECTION

**240**

POSITION INFORMATION RECEIVING SECTION

**231**

STARTING NODE RESTORING SECTION

FIG.8

FIG.9

EP 1 755 096 A1

TRANSMITTING SIDE

RECEIVING SIDE

```
        ┌───────────┐
        │   START   │
        └───────────┘
              │
   S3010      ▼
        ┌─────────────────┐
        │   CALCULATE     │
        │ ABSOLUTE POSITION│
        │ OF STARTING NODE │
        └─────────────────┘
              │
   S3020      ▼
        ┌─────────────────┐
        │ CALCULATE RELATIVE│
        │ POSITION OF EACH │
        │      NODE        │
        └─────────────────┘
              │
   S3030      ▼
          ╱───────╲        NO
         ╱  UPLINK? ╲──────────
         ╲          ╱
          ╲───────╱
              │ YES
   S3040      ▼
        ┌─────────────────┐
        │ CONVERT ABSOLUTE │
        │  POSITION OF     │
        │ STARTING NODE TO │
        │ RELATIVE POSITION│
        │ AND TRANSMIT     │
        │  SHAPE DATA      │
        └─────────────────┘
              │
              ▼
        ┌───────────┐
        │    END    │
        └───────────┘
```

RECEIVING SIDE

```
        ┌───────────┐
        │   START   │
        └───────────┘
              │
              ▼
        ┌─────────────┐
        │  RECEIVE    │  S4010
        │ SHAPE DATA  │
        └─────────────┘
              │
              ▼
        ┌─────────────┐
        │   SPECIFY   │  S4020
        │ TRANSMITTED │
        │  POSITION   │
        │ INFORMATION │
        │ COLLECTING  │
        │ APPARATUS AND│
        │EXTRACT ABSOLUTE│
        │ LATITUDE AND │
        │  LONGITUDE   │
        └─────────────┘
              │
              ▼
        ┌─────────────┐
        │  CALCULATE  │  S4030
        │ABSOLUTE LATITUDE│
        │AND LONGITUDE OF│
        │ STARTING NODE OF│
        │  SHAPE DATA  │
        └─────────────┘
              │
              ▼
        ┌─────────────┐
        │  CALCULATE  │  S4040
        │ABSOLUTE POSITION│
        │ OF ALL NODES OF│
        │  SHAPE DATA  │
        └─────────────┘
              │
              ▼
        ┌───────────┐
        │    END    │
        └───────────┘
```

FIG.10

10 VECTOR SHAPE

20 NODE SEQUENCE

Nn

VARIATION DIFFERENCE IN
ORIENTATION＝θj

DISTANCE＝Lj

N3

N2

STARTING NODE N1
(ABSOLUTE LATITUDE AND LONGITUDE)

FIG.11

<table>
<tr><td colspan="2" align="center"><strong>INTERNATIONAL SEARCH REPORT</strong></td><td>International application No.<br>PCT/JP2005/008919</td></tr>
</table>

| | |
|---|---|
| A. CLASSIFICATION OF SUBJECT MATTER<br>Int.Cl$^7$ G09B29/00, G01C21/00 | |

According to International Patent Classification (IPC) or to both national classification and IPC

**B. FIELDS SEARCHED**

Minimum documentation searched (classification system followed by classification symbols)
Int.Cl$^7$ G09B29/00, G01C21/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2001-56823 A (Matsushita Electric Industrial Co., Ltd.),<br>27 February, 2001 (27.02.01),<br>Par. Nos. [0020] to [0035], [0066] to [0077];<br>Figs. 10, 22<br>& WO 2000/031663 A1 & EP 1134674 A1<br>& US 6636802 B1 | 1-3,6,9,10<br>5<br>4,7,8 |
| Y<br>A | JP 2003-23357 A (Matsushita Electric Industrial Co., Ltd.),<br>24 January, 2003 (24.01.03),<br>Full text<br>& WO 2002/091587 A1 & CA 2443268 A<br>& US 2003/0093221 A1 & EP 1385269 A1 | 5<br>4,7,8 |

| | | | |
|---|---|---|---|
| ☐ Further documents are listed in the continuation of Box C. | | ☐ See patent family annex. | |

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>13 July, 2005 (13.07.05) | Date of mailing of the international search report<br>26 July, 2005 (26.07.05) |
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

**Patent documents cited in the description**

- JP 2002328027 A

- JP 2004153858 A